Europäisches Patentamt

**European Patent Office**

Office européen des brevets

(19)

(11) Publication number: **0 205 988**
**B1**

(12)

# EUROPEAN PATENT SPECIFICATION

(45) Date of publication of the patent specification:
**22.02.89**

(51) Int. Cl.⁴: **B23Q 1/02**

(21) Application number: **86107368.2**

(22) Date of filing: **28.09.83**

(60) Publication number of the earlier application in accordance with Art. 76 EPC: **0106595**

(54) Improvements in machine tools.

(30) Priority: **28.09.82  US 426188**

(43) Date of publication of application:
**30.12.86 Bulletin 86/52**

(45) Publication of the grant of the patent:
**22.02.89 Bulletin 89/8**

(84) Designated Contracting States:
**AT BE CH DE FR GB IT LI LU NL SE**

(56) References cited:
**EP-A- 0 011 256**
**DE-A- 1 903 171**
**DE-A- 2 165 497**
**DE-A- 2 902 920**
**GB-A- 1 583 611**

**WO-A-81/01223**

(73) Proprietor: **Yang, Tai-Her, 5-1 Tay Pyng St., Shi Hwu Jenn Jang Huah Shiann(TW)**

(72) Inventor: **Yang, Tai-Her, 5-1 Tay Pyng St., Shi Hwu Jenn Jang Huah Shiann(TW)**

(74) Representative: **Arthur, Bryan Edward et al, 4 Dyers Buildings Holborn, London, EC1N 2JT(GB)**

## Description

The present invention relates to machine tools. The application is divided out of European Patent Application No. EP 83305856.3, Publication No. 0106595.

Patent GB 1 583 611 discloses a machine tool in which the units, one comprising cutting tools and the other comprising pre-bending rollers, are movable along a track and are interconnectable by means of a releasable coupling.

The present invention provides an improved arrangement of work-table for a machine tool, and is defined in the claims appended hereto. It will now be described with reference to the drawings, in which:

Fig. 1 shows a linear type of work-table set.
1–1 Main work-table.
1–2 Small work-table.
1–3 Lathe bed.
1–4 Lead screw of small work-table.
1–5 Lead screw of main work-table.
Fig. 2 shows the work-table set of Figure 1 in use.
2–1 Main work-table.
2–2 Small work-table.
2–3 Lathe bed.
2–4 Lead screw of small work-table.
2–5 Lead screw of main work-table.
2–6 Drive motor of small work-table.
2–7 Drive motor of main work-table.
2–8 Tool post.
2–9 Tool drive motor.
2–10 Tool.
2–11 Work-piece.
Fig. 3 shows a co-axial ring-shaped work-table set.
3–1 Small rotary work-table.
3–2 Co-axial outer ring structure.
3–3 Base.
3–4 Roller.
3–5 Main work-table.
3–6 Lathe bed.
Fig. 4 is a set of diagrams showing how the work-tables of Fig. 3 may be driven in the same or opposite directions, independently or synchronously.
4–1 Small rotary work-table.
4–2 Co-axial outer ring structure.
4–3 Base.
4–4 Roller.
4–5 Main work-table.
4–6 Lathe bed.
Fig. 5 and 6 show the work-table set of Fig. 3 in use, with the main work-table carrying a motor-driven tool, and the small work-table carrying a work-piece.
5–1 Co-axial outer ring structure.
5–2 Rotary working table.
5–3 Working piece.
5–4 Tool post.
5–5 Tool driving motor.
5–6 Tool.
Fig. 7 and 8 are diagrams showing a multiple tool arrangement.

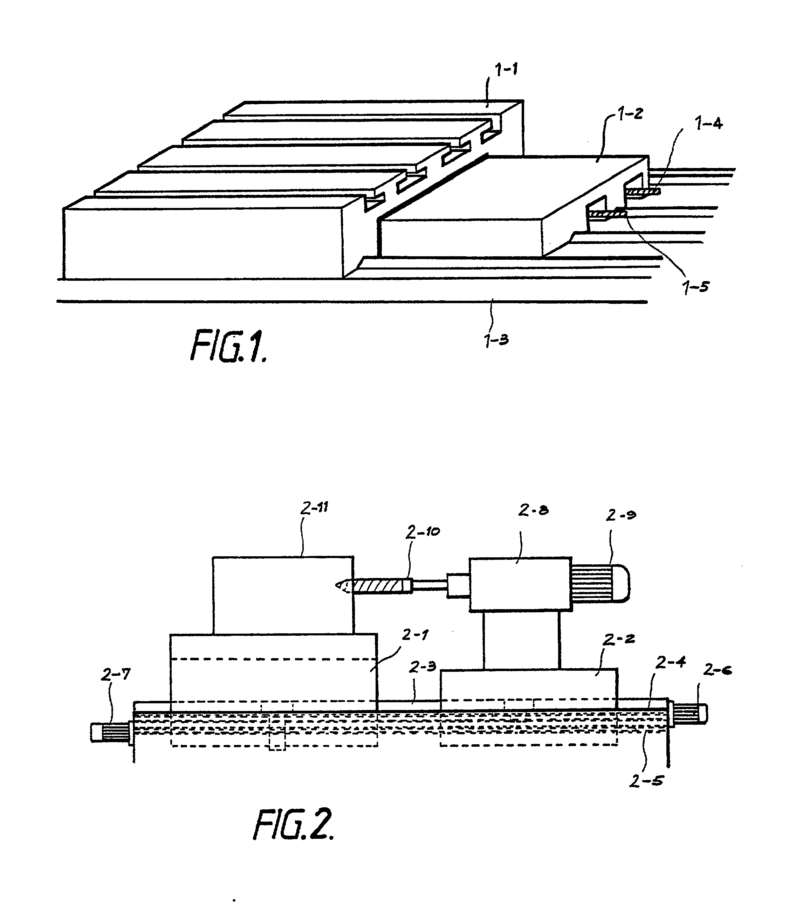

In the work-table set shown in Figure 1, one or more small work-tables (1–2) are provided underneath a main work-table (1–1), being driven parallel to the direction of the main work-table (1–1). The small work-table (1–2) may have the same lenght as the main work-table (1–1), but need not. The small work-table may be able to pass completely through the main work-table. As shown in Figure 2, a tool post 2–8 may be attached to one work-table and a work-piece be mounted on the other, enabling, for example, an operation to be performed on one side of the work-piece while the top is free for processing by the machine tool.

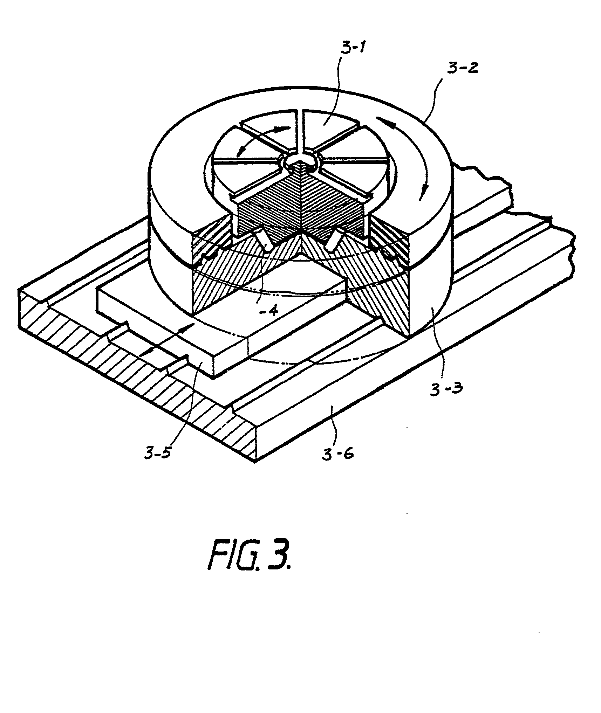

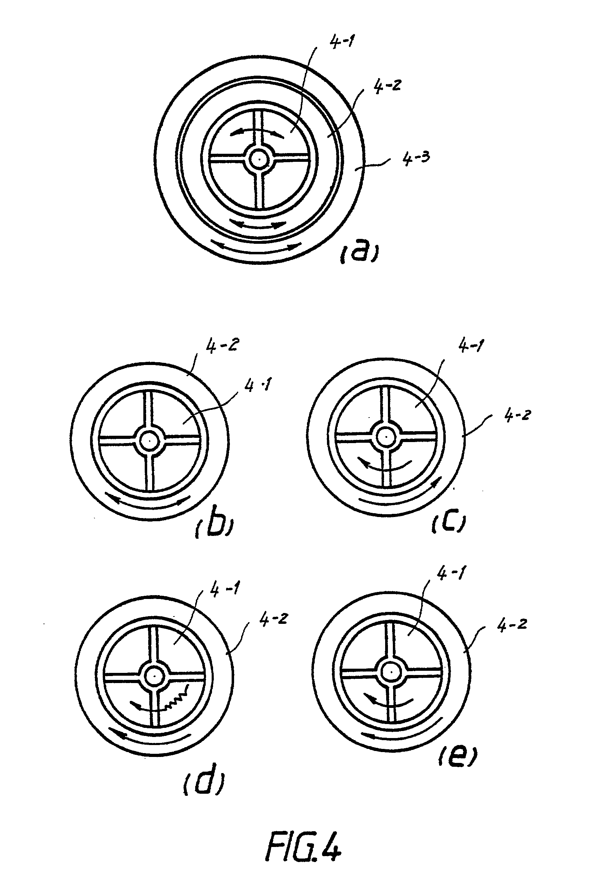

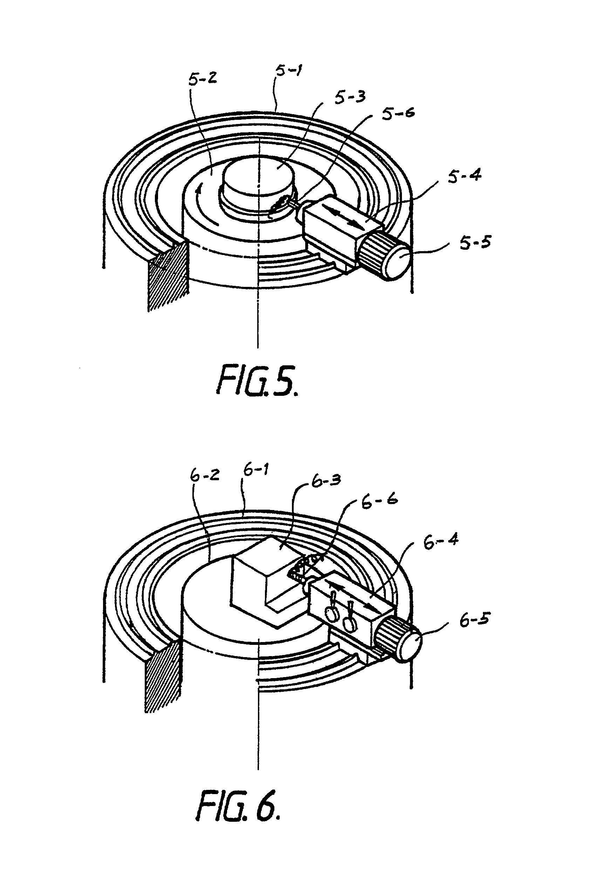

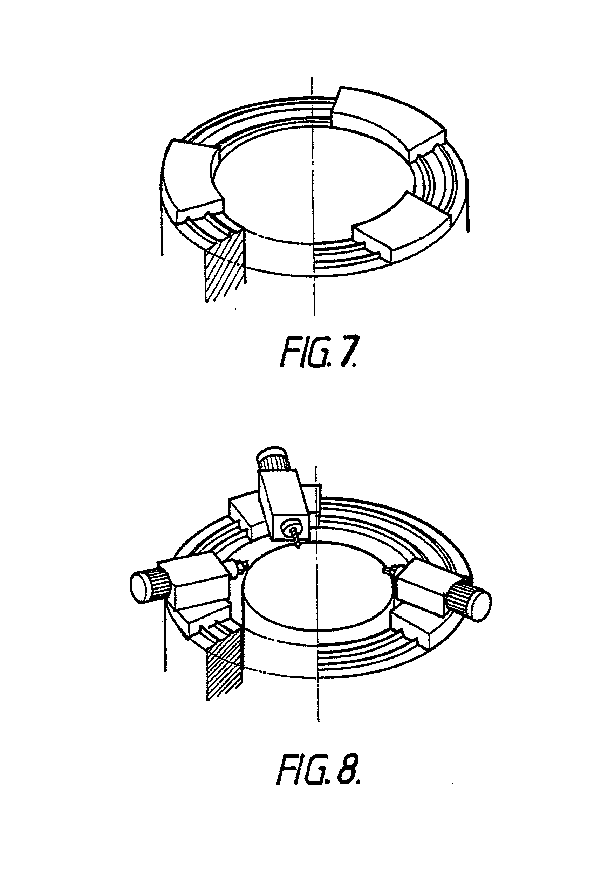

Besides the linear work-table set of Figures 1 and 2, co-axial rotary types may be employed, as shown in Figures 3 to 6. These may comprise one or more layers of co-axial ring-shaped structures as shown in Figure 3, and driving motors may be provided for synchronous or independent rotation in either direction, as shown in Figure 4. Processing may be carried out on a work-piece on an adjacent table, as shown in Figure 5 and Figure 6. A multiple arrangement, as shown in Figure 7 and 8 may be suitable for use on an assembly line.

## Claims

1. A machine tool having a bed (1–3) with guideway means and units movable along the guideway means, characterised in that the units comprise a main work-table (1–1 or 5–4) movable along a first guideway of the guideway means and at least one smaller work-table (1–2 or 5–3) independently movable within or partially within the main work-table and along a guideway different from the first guideway.

2. A machine tool according to claim 1, in which the work-tables are arranged for linear movement and are driven by independent lead screws (1–4, 1–5).

3. A machine tool according to claim 1, in which the work-table set includes a pair of rotatable work-tables (3–1, 3–2) co-axially arranged.

4. A machine tool according to claim 3, having a work-table set comprising an outer (3–2) and an inner (3–1) work-table, the work-table set being linearly driven along the guideway and the outer and inner work-tables being rotated by separate motors.

## Patentansprüche

1. Werkzeugmaschine, die ein Maschinenbett (1–3) mit Führungseinrichtungen und an den Führungseinrichtungen entlang bewegbaren Einheiten aufweist, dadurch gekennzeichnet, daß die Einheiten einen Hauptaufspanntisch (1–1 oder 5–4), der entlang einer ersten Führung der Führungseinrichtungen bewegbar ist, und wenigstens einen kleineren Aufspanntisch (1–2 oder 5–3) umfassen, der unabhängig in oder teilweise in dem Hauptaufspanntisch und entlang einer von der ersten Führung verschiedenen Führung bewegbar ist.

2. Werkzeugmaschine nach Anspruch 1 bei der die Aufspanntische linear bewegbar angeordnet sind und von unabhängigen Schraubenspindeln (1–4, 1–5) angetrieben werden.

3. Werkzeugmaschine nach Anspruch 1 bei der der Aufspanntischsatz ein Paar von drehbaren Aufspanntischen (3–1, 3–2) einschließt, die koaxial angeordnet sind.

4. Werkzeugmaschine nach Anspruch 3 mit einem Aufspanntischsatz, der einen äußeren (3–2) und einen inneren (3–1) Aufspanntisch umfaßt, wobei der Aufspanntischsatz linear entlang der Führung angetrieben wird und der äußere und der innere Aufspanntisch durch separate Motoren gedreht werden.

**Revendications**

1. Machine-outil comprenant une table (1–3) avec des moyens de guidage et des unités mobiles le long du moyen de guidage, caractérisée en ce que les unités comprennent une table de travail principale (1–1 ou 5–4) mobile le long d'une première glissière du moyen de guidage et au moins une table de travail (1–2 ou 5–3) plus petite mobile dans ou partiellement dans la table de travail principale et le long d'une glissière différente de la première glissière.

2. Machine-outil selon la revendication 1, dans laquelle les tables de travail sont disposées pour se déplacer de façon linéaire et sont entraînées par des tiges filetées indépendantes (1–4, 1–5).

3. Machine-outil selon la revendication 1, dans laquelle le jeu de tables de travail comprend une paire de tables de travail rotatives (3–1, 3–2) disposées coaxialement.

4. Machine-outil selon la revendication 3, comprenant un jeu de tables de travail composé d'une table de travail extérieure (3–2) et d'une table de travail intérieure (3–1), le jeu de tables de travail étant entrainé de façon linéaire le long de la glissière et les tables de travail extérieure et intérieure étant tournées par des moteurs distincts.

FIG.1.

FIG.2.

FIG. 3.

FIG.4

FIG. 5.

FIG. 6.

FIG. 7.

FIG. 8.